(19) Europäisches Patentamt

European Patent Office

Office européen des brevets

(11) Veröffentlichungsnummer: **0 305 985**
**A1**

(12) **EUROPÄISCHE PATENTANMELDUNG**

(21) Anmeldenummer: **88114167.5**

(22) Anmeldetag: **31.08.88**

(51) Int. Cl.⁴: **C04B 35/58 , D01F 9/10 ,**
**C01B 35/14 , C01B 21/064 ,**
**C07F 5/05 , C07F 7/10**

(30) Priorität: **01.09.87 DE 3729191**

(43) Veröffentlichungstag der Anmeldung:
**08.03.89 Patentblatt 89/10**

(84) Benannte Vertragsstaaten:
**BE DE FR GB IT NL**

(71) Anmelder: **WACKER-CHEMIE GMBH**
**Prinzregentenstrasse 22**
**D-8000 München 22(DE)**

(72) Erfinder: **Rengstl, Alfred, Dr., Dipl.-Chem.**
**Zoglerberg 8**
**D-8261 Reischach(DE)**

(54) **Verfahren zur Herstellung von keramischen Fasern auf der Basis von Bornitrid.**

(57) Die Erfindung betrifft ein Verfahren zur Herstellung von keramischen Fasern auf der Basis von Bornitrid, das dadurch gekennzeichnet ist, daß ein Polyborazin, erhalten durch Umsetzung zumindest eines Bortrihalogenids der Formel

$BX_3$ ,

wobei X Fluor-, Chlor-, Brom- oder Iodrest bedeutet, mit zumindest einem Organodisilazan der Formel

$R(CH_3)_2SiNHSi(CH_3)_2R$ ,

wobei R Wasserstoff oder gleiche oder verschiedene Alkyl-oder Arylreste bedeutet,
zu Fasern versponnen wird und unter inerter Atmosphäre oder im Vakuum bei Temperaturen im Bereich von 800 - 1500 °C pyrolysiert wird.

EP 0 305 985 A1

## Verfahren zur Herstellung von keramischen Fasern auf der Basis von Bornitrid

Keramische Fasern auf der Basis von Bornitrid finden vor allem Verwendung als Verstärkungskomponenten in Hochleistungsverbundwerkstoffen, wobei deren Beständigkeit bei hohen Temperaturen beispielsweise gegenüber oxidierender Atmosphäre genutzt wird.

Die Herstellung von Bornitridfasern aus den Polymeren der Kondensationsprodukte von B-triamino-N-tris(trialkylsilyl)borazinen beschreiben Paciorek et al. in der US-A-4581468.

In der DE-A-3528394 werden Organobornitridpolymere durch Umsetzung von Borazinderivaten mit Aminen erhalten. Diese Organobornitridpolymeren eignen sich als Ausgangsmaterialien für die Herstellung von Bornitrid und als Bindemittel für Bornitridpulver.

C.K. Narula et al., Polym. Prep. Am. Chem. Soc. 28(1), 454 (1987) beschreiben die Umsetzung von B-trichloroborazin sowie B-trichloro-N-trimethylborazin mit Hexamethyldisilazan zu einem Organoborpolymeren und dessen Pyrolyse zu keramischen Überzügen auf Basis von $BN/B_4C$.

Aufgabe der Erfindung ist ein Verfahren zur Herstellung von keramischen Fasern auf der Basis von Bornitrid, das von großtechnischen Basischemikalien ausgeht und deren Umsetzung zu den Fasern wenig isolierte Zwischenstufen durchläuft.

Gelöst wird diese Aufgabe durch ein Verfahren zur Herstellung von keramischen Fasern auf der Basis von Bornitrid, das dadurch gekennzeichnet ist, daß ein Polyborazin, erhalten durch Umsetzung zumindest eines Bortrihalogenids der Formel
$BX_3$ ,

wobei X Fluor-, Chlor-, Brom- oder Iodrest bedeutet,
mit zumindest einem Organodisilazan der Formel

$R(CH_3)_2SiNHSi(CH_3)_2R$ ,

wobei R Wasserstoff oder gleiche oder verschiedene Alkyl- oder Arylreste bedeutet,
zu Fasern versponnen wird und unter inerter Atmosphäre oder im Vakuum bei Temperaturen im Bereich von 800 - 1500 °C pyrolysiert wird.

Die Umsetzung zumindest eines Bortrihalogenids der Formel

$BX_3$ ,

wobei X Fluor-, Chlor-, Brom- oder Iodrest bedeutet,
mit zumindest einem Organodisilazan der Formel

$R(CH_3)_2SiNHSi(CH_3)_2R$ ,

wobei R Wasserstoff oder gleiche oder verschiedene Alkyl- oder Arylreste bedeutet,
erfolgt vorzugsweise bei einem molaren Verhältnis Bortrihalogenid zu Organodisilazan im Bereich von 1:2 bis 1:5, insbesondere werden äquimolare oder etwa äquimolare Mengen eingesetzt.

Eine bevorzugte Ausführungsform der Umsetzung zumindest eines Bortrihalogenids der Formel

$BX_3$ ,

wobei X Fluor-, Chlor-, Brom- oder Iodrest bedeutet,
mit zumindest einem Organodisilazan der Formel

$R(CH_3)_2SiNHSi(CH_3)_2R$ ,

wobei R Wasserstoff oder gleiche oder verschiedene Alkyl- oder Arylreste bedeutet,
ist dadurch gekennzeichnet, daß Bortrihalogenid und Organodisilazan ggf. in Gegenwart eines inerten organischen Lösungsmittels bei Temperaturen im Bereich von -20 °C bis 100 °C, vorzugsweise 0 bis 25 °C unter inerter Atmosphäre umgesetzt werden und nachfolgend ggf. nach destillativer Entfernung des Lösungsmittels unter inerter Atmosphäre eine Wärmepolymerisation bei Temperaturen im Bereich von 0 bis 500 °C, vorzugsweise 250 bis 400 °C, durchgeführt wird.

Vorzugweise wird diese Umsetzung beim Druck der umgebenden Atmosphäre, also bei 1020 hPa (abs.) oder etwa 1020 hPa (abs.), durchgeführt.

Die Dauer der Wärmepolymerisation hängt von der angewandten Temperatur und der Aufheizgeschwindigkeit ab. Diese Parameter bestimmen neben den Ausgangsverbindungen auch den Vernetzungsgrad der erhaltenen Polymeren. Bevorzugte Polymere werden erhalten wenn Aufheizraten von 0,1 bis 20 °C/min, vorzugsweise von 2 bis 5 °C/min eingehalten werden, und das Reaktionsgemisch 0,1 bis 500 min, vorzugsweise 10 bis 60 min, auf der Endtemperatur gehalten wird.

Falls gewünscht, können den Reaktionspartnern Bortrihalogenid und Organopolysilazan weitere Zusätze wie die Halogenide der Elemente Titan, Zirkon, Hafnium, Magnesium, Beryllium, Phosphor oder Zinn, sowie Alkyl- oder Arylchlorsilane, wie Methyltrichlorsilan, Dimethyldichlorsilan, Trimethylchlorsilan oder Phenyltrichlorsilan und Trichlorsilan und Tetrachlorsilan zugegeben werden. Auch metallorganische Zusätze wie $R'AlY_2$, $R'BY_2$ mit R' ist gleich Alkyl- oder Arylrest oder $Cp_2TiY_2$, $Cp_2ZrY_2$ oder $Cp_2HfY_2$ mit Cp ist gleich Cyclopentadienylrest und X ist gleich Halogen sind möglich. Werden diese Zusätze zugegeben, so sind sie stets nur als Nebenbestandteile in Mengen von 0,1 bis 30 Gew.-%, bezogen auf eingesetztes Borhalogenid, vorhanden.

Beispiele für inerte organische Lösungsmittel sind Alkane oder Alkangemische verschiedener Siedefraktionen, wie Hexan, Isooktan, Petroläther, cyclische Alkane, wie Cyclohexan oder Aromaten, wie Toluol und Xylol.

Bevorzugter Rest X der Formel

BX$_3$ ,

ist der Chlorrest.

Bevorzugte Reste R der Formel

R(CH$_3$)$_2$SiNHSi(CH$_3$)$_2$R ,

sind Wasserstoff sowie der Methyl-, Vinyl- und Phenylrest.

Das Verspinnen der Polyborazine zu Fasern erfolgt durch bekannte Spinnverfahren, wie Trokkenspinnen, Naßspinnen oder Schmelzspinnen, vorzugsweise jedoch durch Schmelzspinnverfahren. Hierbei werden aus der Schmelze Fasern mit einem mittleren Durchmesser von 10 bis 200 μm, vorzugsweise von 15 bis 50 μm, versponnen. Die durch das Verspinnen erhaltenen Fasern werden durch Einwirkung von Wärme, Licht, wie beispielsweise UV-Licht, Wasserdampf und/oder Luftsauerstoff vernetzt. Auch mit verdampften oder gasförmigen Halogenverbindungen, wie Halogenwasserstoffen, Alkyl-, Aryl-, Vinylsiliciumhalogeniden, Titanhalogenniden, Siliciumhalogeniden, Zinnhalogeniden, Bleihalogeniden, Phosporhalogeniden, Arsenhalogeniden und Schwefelhalogeniden, ist diese Vernetzung zu realisieren.

Die vernetzten Fasern werden zu einem Faserbündel mit 10 bis 1000 Einzelfäden (Filamenten) gebündelt bei Temperaturen im Bereich von 800 bis 1500 °C, vorzugsweise 1000 bis 1100 °C, unter inerter Atmosphäre oder im Vakuum zu keramischen Fasern auf Basis von Bornitrid umgesetzt.

Es werden keramische Fasern auf der Basis von Bornitrid erhalten, die noch Anteile an B$_4$C enthalten.

Bevorzugte inerte Atmosphären sind Stickstoff- und Argonatmosphäre.

Keramische Fasern auf der Basis von Bornitrid finden vor allem Verwendung in Faserverbundwerkstoffen, vorzugsweise Kunststoffen wie Epoxiden, Polyestern, Polyimiden, Metallen wie Aluminium, Magnesium, Titan oder keramischen Materialien wie Siliciumcarbid, Siliciumnitrid, Sialon, Borcarbid, Aluminiumoxid, Mullit, Siliciumdioxid, Glaskeramik.

Beispiel 1:

Zu einer Lösung von 37,5 g Bortrichlorid in 100 ml Toluol 1 wurden bei 5 °C 160,6 g Hexamethyldisilazan so zugetropft, daß die Temperatur nicht über 12,5 °C stieg. Dann wurde 15 min am Rückfluß gekocht und das Toluol abdestilliert. Anschließend wurde innerhalb von 40 min auf 365 °C erhitzt und die Reaktionsmischung für 10 min bei dieser Temperatur gehalten. Nach dem Erkalten erhielt man in einer Ausbeute von 30 Gew.-%, bezogen auf eingesetztes Bortrichlorid, ein Harz, welches einen Schmelzpunkt von 160 °C aufwies und in CCl$_4$, THF, Toluol, CHCl$_3$, CH$_2$Cl$_2$ löslich war.

Elementaranalyse:

Cl < 0,5 %
N = 19,1 %
C = 28,2 %
H = 8,0 %
Si = 22,1 %
B = 15,4 %

Im IR-Spektrum findet man (N-H)-Banden bei 3450 cm$^{-1}$, die (C-H)-Banden bei 2960, 2900 cm$^{-1}$. Charakteristisch ist jedoch die breite (B-N-B)-Bande bei 1350 - 1550 cm$^{-1}$.

In einer Schmelzspinnvorrichtung mit 300 μm Düse wurde dieses Polymer bei 170 °C und 10 bar Argondruck versponnen, wobei die Abzugsgeschwindigkeit 40 m/min betrug. Die Fasern wurden dann durch 3-stündiges Tempern an Luft bei 100 °C unschmelzbar gemacht.

1 Die so vernetzten Fasern wurden anschließend in einem Röhrenofen mit Argonspülung auf 1000 °C aufgeheizt. Nach 10 min Haltezeit bei 1000 °C wurden die Fasern aus dem Ofen gezogen.
Keramische Ausbeute (bezogen auf unvernetztes Polymer in unversponnener Form) : 53 %

## Ansprüche

1. Verfahren zur Herstellung von keramischen Fasern auf der Basis von Bornitrid, dadurch gekennzeichnet, daß ein Polyborazin, erhalten durch Umsetzung zumindest eines Bortrihalogenids der Formel

BX$_3$ ,

wobei X Fluor-, Chlor-, Brom- oder Iodrest bedeutet,

mit zumindest einem Organodisilazan der Formel

$R(CH_3)_2SiNHSi(CH_3)_2R$ ,

wobei R Wasserstoff oder gleiche oder verschiedene Alkyl- oder Arylreste bedeutet,
zu Fasern versponnen wird und unter inerter Atmosphäre oder im Vakuum bei Temperaturen im Bereich von 800 -1500 °C pyrolysiert wird.

2. Verfahren nach Anspruch 1, dadurch gekennzeichnet, daß Bortrihalogenid und Organodisilazan in einem molaren Verhältnis im Bereich von 1:2 bis 1:5 eingesetzt werden.

3. Verfahren nach Anspruch 1 oder 2, dadurch gekennzeichnet, daß Bortrihalogenid und Organodisilazan bei Temperaturen im Bereich von -20 °C bis 100 °C unter inerter Atmosphäre umgesetzt werden und nachfolgend unter inerter Atmosphäre eine Wärmepolymerisation bei Temperaturen im Bereich von 0 bis 500 °C durchgeführt wird.

4. Verfahren nach einem der Ansprüche 1 bis 3, dadurch gekennzeichnet, daß Bortrichlorid eingesetzt wird.

5. Verfahren nach einem der Ansprüche 1 bis 4, dadurch gekennzeichnet, daß Organodisilazan der Formel

$R(CH_3)_2SiNHSi(CH_3)_2R$ ,

wobei R Wasserstoff, Methyl-, Vinyl- oder Phenylrest bedeutet,
eingesetzt wird.

| | **EINSCHLÄGIGE DOKUMENTE** | | EP 88114167.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 4 581 468 (PACIOREK et al.)<br>* Gesamt *<br><br>-- | 1 | C 04 B 35/58<br>D 01 F 9/10<br>C 01 B 35/14 |
| P,X | US - A - 4 707 556 (PACIOREK et al.)<br>* Gesamt *<br><br>-- | 1 | C 01 B 21/064<br>C 07 F 5/05<br>C 07 F 7/10 |
| X | EP - A1 - 0 161 751 (DOW CORNING CORPORATION)<br>* Ansprüche *<br><br>---- | 1-4 | |

| | RECHERCHIERTE SACHGEBIETE (Int. Cl.4) |
|---|---|
| | C 04 B<br>D 01 F<br>C 08 G<br>C 07 F<br>C 01 B |

Der vorliegende Recherchenbericht wurde für alle Patentansprüche erstellt.

| Recherchenort | Abschlußdatum der Recherche | Prüfer |
|---|---|---|
| WIEN | 07-12-1988 | BECK |